# EUROPEAN PATENT SPECIFICATION

(11) **EP 4 019 796 B1**
(45) Date of publication and mention of the grant of the patent: **12.06.2024**
(21) Application number: 19947993.2
(22) Date of filing: 30.09.2019
(51) Int. Cl.: F16D 57/02, B25J 17/02, H02K 7/02, B25J 19/00, F16D 57/06

(54) **BRAKE ASSEMBLY AND ROBOT JOINT WITH SAME, AND ROBOT**
BREMSANORDNUNG UND ROBOTERVERBINDUNG DAMIT, UND ROBOTER
ENSEMBLE FREIN ET ARTICULATION DE ROBOT DOTÉE DE CELUI-CI, ET ROBOT

(43) Date of publication of application: 29.06.2022
(73) Proprietor: Siemens Ltd., China, Chaoyang District Beijing 100102 (CN)
(72) Inventor: ZHANG, Sheng, Langfang, Hebei 065000 (CN); YANG, Yong, Beijing 102200 (CN); JIANG, Chao, Beijing 100071 (CN)
(74) Representative: Isarpatent
(86) International application number: PCT/CN2019/109593
(87) International publication number: WO 2021/062699

(56) References cited:
- CN-A- 104 802 182
- CN-A- 105 003 569
- CN-A- 105 003 569
- CN-A- 106 564 071
- CN-A- 106 564 071
- CN-A- 106 737 824
- CN-A- 106 737 824
- CN-A- 107 738 268
- CN-A- 107 738 268
- CN-U- 202 851 745
- CN-U- 202 851 745
- DE-A1-102006 031 747
- JP-A- 2001 099 201
- US-A- 4 625 836

## Description

### Technical Field

The present invention relates to a brake assembly for a robot joint and a joint with the brake assembly and a robot, in particular to a brake assembly able to adjust the brake damping based on the hydraulic pressure, a joint with the brake assembly and a robot.

### Background Art

Industrial robots are widely applied in modern industrial production. Most industrial robots, for example, manipulators and collaborative robots, have a plurality of degrees of freedom of motion, wherein the degree of freedom of rotation is usually realized by a joint. In consideration of safety, it is necessary to provide a brake mechanism for a robot joint so that a robot can hold a pose in the case of a power outage or accident (for example, transmission mechanism failure).

Most robot joints are driven by a torque motor. A torque increase is realized by reducing the speed of a harmonic gear. The reduction ratio of a harmonic gear can usually be above 100. This means the torque on the joint output side is more than 100 times the torque output by the motor. For this reason, the joint brake mechanism is usually arranged on the joint input side (motor side) where the torque is small. However, in consideration of protecting the torque sensor and the transmission mechanisms such as harmonic drive mechanism, it is more ideal to arrange the joint brake mechanism on the joint output side. This is because when a robot receives a large external impact, the brake mechanism arranged on the joint output side can isolate the torque caused by the external impact and prevent the torque from being transferred to the joint input side to damage other members. Since the joint brake mechanism arranged on the joint output side needs to bear a large torque, the joint brake mechanism is usually complex and heavy. The complex structure and the heavy weight will bring about an adverse influence to the performance of the robot.

In addition, the common joint brake mechanism in prior robots is usually a rigid brake mechanism. For example, a brake is realized by inserting a retainer between teeth of a brake disc. Such a brake way is simple but unfavorable to the maintenance of the robot. Damping brake devices based on a magnetorheological fluid are also provided, but the damping of these brake devices cannot be adjusted.

Reference is made to CN 105 003 569 A and US 4 625 836 A.

### Summary of the Invention

For the problems in the prior art, the present invention provides a damping-adjustable brake assembly which can bear a large torque and thus can be arranged on the joint output side, and the present invention further provides a joint with the brake assembly and a robot.

In an aspect, the present invention provides a brake assembly for a robot joint and the brake assembly may comprise:
a stator ring, a channel being arranged in the stator ring, the channel containing hydraulic oil, the channel comprising a first channel section and a second channel section communicating with each other through a communication channel, switch parts being arranged in the communication channel and being able to open and close the communication channel, a plurality of first holes extending radially being opened in the radial inner surface of the stator ring in the first channel section, a plurality of first brake parts being airtightly arranged in the corresponding first holes and being able to move between a stretching position and a retraction position along the axes of the corresponding first holes, a plurality of second holes extending radially being opened in the radial inner surface of the stator ring in the second channel section, a plurality of second brake parts being airtightly arranged in the corresponding second holes and being able to move between a stretching position and a retraction position along the axes of the corresponding second holes, and
a rotor disc concentrically arranged in the stator ring, the rotor disc being able to rotate around the axis common to the stator ring relative to the stator ring, the outer circumference of the rotor disc having a curved tooth profile,
wherein, the pressure of the hydraulic oil is configured to that each first brake part and each second brake part simultaneously contact the curved tooth profile of the rotor disc, the positions of the plurality of first holes and the plurality of second holes and the curved tooth profile are configured to that the sum of the displacements of all the first brake parts and all the second brake parts relative to the retraction position is constant during a rotation of the rotor disc and thus the rotor disc can rotate relative to the stator ring when the switch parts do not close the communication channel, and in addition, the positions of the plurality of first holes and the curved tooth profile are configured to that the sum of the displacements of all the first brake parts relative to the retraction position is not constant during a rotation of the rotor disc and thus the first brake parts and the second brake parts brake the rotor disc when the switch parts close the communication channel. Since collaborative brake is realized through the cooperation between a plurality of brake parts and the curved tooth profile, the joint for a robot can bear a large torque and thus can be arranged on the joint output side. In addition, since the flow resistance of hydraulic oil between two channel sections can be adjusted by adjusting the opening degree of the communication channel, the joint for a robot can provide a damping-adjustable flexible brake.

According to a preferred implementation mode of the present invention, the switch part comprises a linear coil, a piston and a spring arranged between the linear coil and the piston, when the linear coil is connected to a power supply, the piston is in the retraction position under the action of a magnetic force generated by the linear coil and opens the communication channel, and when the linear coil is disconnected from the power supply, the piston is in the stretching position under the action of the elastic force of the spring and closes the communication channel.

According to a preferred implementation mode of the present invention, the switch part is configured to adjust the opening degree of the communication channel. The advantageous technical effect of the preferred implementation mode at least lies in that the motion damping of brake parts can be adjusted by adjusting the opening degree of the communication channel.

According to a preferred implementation mode of the present invention, the first brake parts and the second brake parts are arranged at intervals on the radial inner surface of the stator ring. The advantageous technical effect of the preferred implementation mode at least lies in that the brake parts can well cooperate with the curved tooth profile of the rotor disc to more steadily realize a flexible brake.

According to a preferred implementation mode of the present invention, the displacements of the plurality of first brake parts relative to the retraction position are equal to each other during a rotation of the rotor disc. The advantageous technical effect of the preferred implementation mode at least lies in that the brake parts can well cooperate with the curved tooth profile of the rotor disc to more steadily realize a flexible brake.

According to a preferred implementation mode of the present invention, the displacements of the plurality of second brake parts relative to the retraction position are equal to each other during a rotation of the rotor disc. The advantageous technical effect of the preferred implementation mode at least lies in that the brake parts can well cooperate with the curved tooth profile of the rotor disc to more steadily realize a flexible brake.

According to a preferred implementation mode of the present invention, the curved tooth profile is a cycloid tooth profile. The advantageous technical effect of the preferred implementation mode at least lies in that the brake parts can well cooperate with the tooth profile of the rotor disc to more steadily realize a flexible brake.

According to a preferred implementation mode of the present invention, the switch part can move in the axial direction of the stator ring to open or close the communication channel and adjust the opening degree of the communication channel. The advantageous technical effect of the preferred implementation mode at least lies in that the motion damping of brake parts can be adjusted by adjusting the opening degree of the communication channel.

According to a preferred implementation mode of the present invention, the first channel section and the second channel section are two circular channels stacked in an axial direction, the two channel sections communicate with each other through a communication channel extending in the axial direction, the switch part is tightly arranged in the communication channel and can move along the airtight channel to completely or partially close, or partially or completely open the communication channel. The advantageous technical effect of the preferred implementation mode at least lies in that the two channel sections and the communication channel are structurally simple and are easy to manufacture.

According to a preferred implementation mode of the present invention, the stator ring comprises a first stator ring portion and a second stator ring portion stacked in an axial direction, and a sealing member located between the first and second stator ring portions, the first channel section is formed in the first stator ring portion, the second channel section is formed in the second stator ring portion, and the communication channel is formed in the sealing member. The advantageous technical effect of the preferred implementation mode at least lies in that the two stator ring portions having a channel section and the sealing member having a communication channel are structurally simple and are easy to manufacture.

According to a preferred implementation mode of the present invention, the second stator ring portion has an axial bulge extending circumferentially, the first stator ring portion is put on the axial bulge, and the first channel section is sealed by the sealing member and the axial bulge. The advantageous technical effect of the preferred implementation mode at least lies in that the two stator ring portions having a channel section and the sealing member having a communication channel are structurally simple and are easy to manufacture, and the sealing effect between the channel sections and the communication channel is good.

According to a preferred implementation mode of the present invention, the switch part is a needle valve spool driven by a linear motor. The advantageous technical effect of the preferred implementation mode at least lies in that it is easy to realize the control of the opening degree of the communication channel.

According to a preferred implementation mode of the present invention, the shape of the end of brake parts matches a portion of the curved tooth profile. The advantageous technical effect of the preferred implementation mode at least lies in that the brake parts can well cooperate with the rotor disc to steadily realize a brake.

In a further aspect, the present invention further provides a robot joint, and the robot joint has the brake assembly described in the above-mentioned implementation modes, wherein the stator ring is connected to a joint cover and the rotor disc is connected to the joint output shaft. The brake assembly of the joint can bear a large torque and thus can be arranged on the joint output side. In addition, because of the damping characteristics of the brake parts, they can fill up the clearance in the joint to effectively reduce spurious vibrations, and thus can improve the operation performance of the robot joint.

In a still further aspect, the present invention further provides a robot and the robot has the robot joint described in the above-mentioned implementation modes. The joint of the robot has a brake assembly able to be arranged on the joint output side, and therefore can isolate an external impact. In addition, because of the damping characteristics of the brake assembly, it can fill up the clearance in the joint to effectively reduce spurious vibrations, and thus can improve the operation performance of the robot joint.

### Brief Description of the Drawings

For the simplicity of the drawings, only the parts related to the present invention are schematically shown and they do not represent actual structures or architectures of products. For the convenience of understanding, the components having the same structure or function are marked with the same or a similar reference sign. In addition, in order to simplify the drawings, only one of the components having the same structure or function is schematically depicted or marked in some drawings. In the drawings,
Fig. 1 schematically illustrates a 3-D view of the brake assembly for a robot joint according to a preferred implementation mode of the present invention,
Fig. 2 schematically illustrates a front view of the brake assembly for a robot joint in Fig. 1 according to a preferred implementation mode of the present invention,
Fig. 3 schematically illustrates a cross-sectional view of the stator ring of the brake assembly for a robot joint along the A-A line in Fig. 2 and illustrates the first channel section, the second channel section, the communication channel communicating the first and second channel sections, and a switch part according to a preferred implementation mode of the present invention,
Fig. 4 schematically illustrates one of a plurality of brake parts adopted for the brake assembly for a robot joint in Fig. 1 according to a preferred implementation mode of the present invention, and
Fig. 5 schematically illustrates a cross-sectional view of the stator ring of the brake assembly for a robot joint along the A-A line in Fig. 2 and illustrates the first channel section, the second channel section, the communication channel communicating the first and second channel sections, and a switch part according to a further preferred implementation mode of the present invention.

Description of reference signs in the drawings: 100-brake assembly for a robot joint; 110- stator ring; 111, 115-switch part; 1151- linear coil; 1152- piston; 1153- spring; 112, 113, 114- holes; 1121, 1131- brake part; 120- rotor disc; 121- curved tooth profile; 122, 123- hole; 210- first stator ring portion; 211- first channel section; 310- second stator ring portion; 311- second channel section; 312- axial bulge; 410- sealing member, 411- communication channel; 51- body portion; 52- end portion; S- endface

### Detailed Description of the Invention

To help to understand the technical characteristics, object, and effects of the present invention more clearly, the specific implementation mode of the present invention is described below by reference to the drawings in which the same reference numeral represents a part whose structure is the same or whose structure is similar but function is the same.

In this document, "schematic" means "acting as an instance, example, or illustration", and any schematic illustration or implementation mode described in this document should not be interpreted as a more preferred or advantageous technical solution.

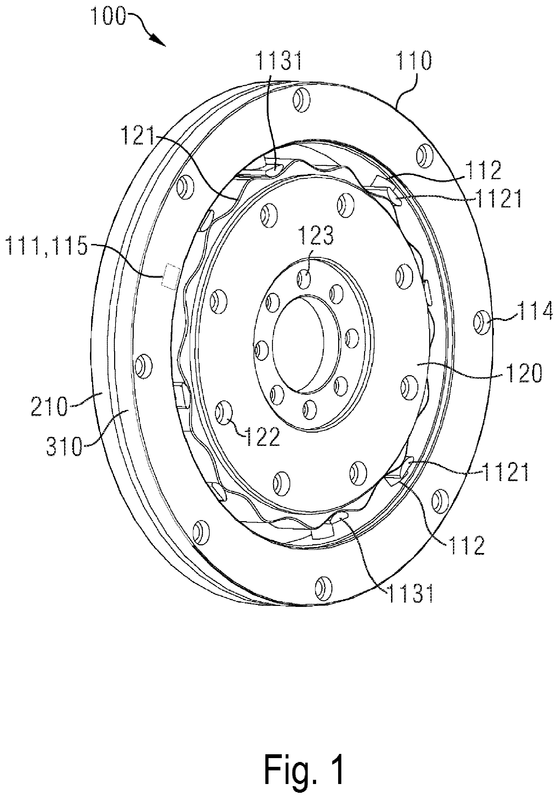

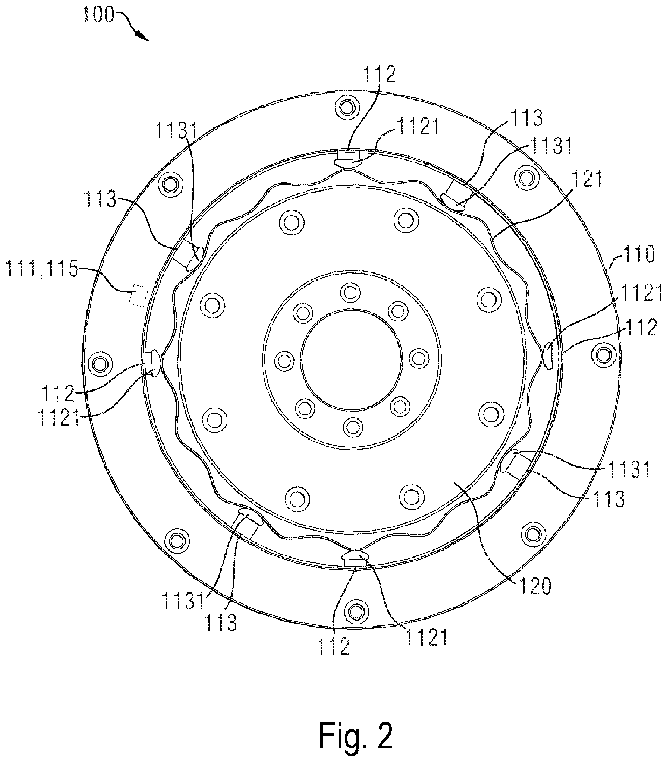

Fig. 1 and 2 schematically illustrate a 3-D view and a front view of the brake assembly for a robot joint according to a preferred implementation mode of the present invention, respectively. As shown in the figures, the brake assembly 100 for a joint according to the present invention comprises a stator ring 110 and a rotor disc 120 arranged concentrically, and the rotor disc 120 can rotate around the axis common to the stator ring 110 to realize the degree of freedom of rotation of a robot. The outer profile 121 of the rotor disc 120 is a curved tooth profile, two groups of brake parts are arranged on the radial inner annular surface of the stator ring 110, the first group of brake parts comprises a plurality of first brake parts 1121, the second group of brake parts comprises a plurality of second brake parts 1131, and a flexible damping brake of the rotor disc 120 relative to the stator ring 110 can be realized through the cooperation of the plurality of brake parts with the curved tooth profile 121.

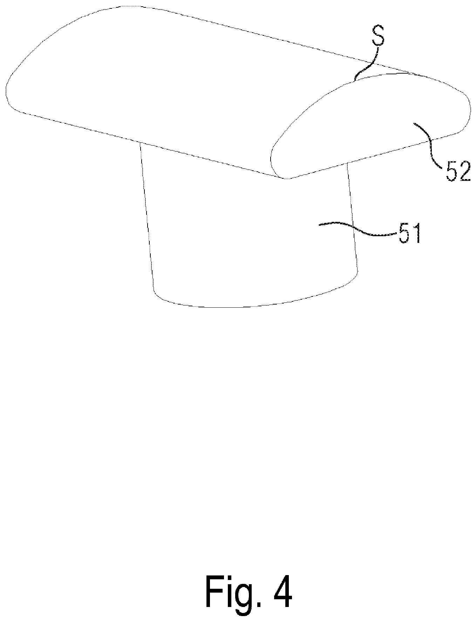

A channel for containing hydraulic oil is arranged in the stator ring 110, the channel comprises a first channel section and a second channel section communicating with each other through a communication channel, a switch part 111 is arranged in the communication channel and can open or close the communication channel and adjust the opening degree of the communication channel to provide adjustable damping for the flowing of hydraulic oil between the two channel sections. A plurality of first holes 112 extending radially are opened in the radial inner surface of the stator ring 110 in the first channel section, and a plurality of first brake parts 1121 are airtightly arranged in the corresponding first holes 112 and are able to move between a stretching position and a retraction position along the axes of the first holes 112. Similarly, a plurality of second holes 113 extending radially are opened in the radial inner surface of the stator ring 110 in the second channel section, and a plurality of second brake parts 1131 are airtightly arranged in the corresponding second holes 113 and are able to move between a stretching position and a retraction position along the axes of the corresponding second holes 113. Since the outer profile 121 of the rotor disc 120 is a curved tooth profile, when the communication channel is opened or partially opened, the raised portions of the curved tooth profile will drive the corresponding brake parts, for example, the brake parts 1121 in the holes 112 in Fig. 1 and 2, to move toward a retraction position as the rotor disc 120 rotates, and the brake parts moving toward a retraction position will enable other brake parts located in recessed positions of the curved tooth profile, for example, brake parts 1131 in the holes 113 in Fig. 1 and 2, to move toward a stretching position through hydraulic oil in the channel. It is easily understood that as the rotor disc 120 further rotates, the brake part 1121 currently located in a retraction position will move toward a stretching position, and the brake part 1131 currently located in a stretching position will move toward a retraction position. The process is repeated in this way. For this purpose, the pressure of the hydraulic oil in the channel is so configured that each first brake part 1121 and each second brake part 1131 simultaneously contact the curved tooth profile of the rotor disc, and the positions of the plurality of first holes 112 and the plurality of second holes 113 and the curved tooth profile 121 are so configured that the sum of the displacements of all brake parts 1121 and 1131 relative to the retraction position is constant (that is to say, the pressure of hydraulic oil is kept constant) during a rotation of the rotor disc 120, and thus the rotor disc 120 can successfully rotate relative to the stator ring 110. Fig. 4 schematically illustrates the structure of a brake part according to a preferred implementation mode of the present invention. As shown in the figure, the brake parts 1121 and 1131 may comprise a body portion 51 matching the shape of the holes 112 and 113 and an end portion 52 for contacting the curved tooth profile 121, the end portion 52 may have a width matching the thickness of the rotor disc 120, the endface S of the end portion 52 is a curved surface, and the shape of the curved surface matches a portion of the curved tooth profile. Preferably, the curved tooth profile 121 is a cycloid tooth profile.

Further, in order to realize a flexible damping brake of the rotor disc 120 relative to the stator ring 110, it is necessary to so configure the positions of the plurality of first holes 112 (or second holes 113) and the curved tooth profile 121 that the sum of the displacements of all the first brake parts 1121 (or second brake parts 1131) relative to the retraction position is not constant during a rotation of the rotor disc. In this way, when the communication channel is closed, the first channel section and the second channel section are isolated from each other and hydraulic oil cannot flow between the first channel section and the second channel section. Because of the incompressibility of hydraulic oil, the first brake parts 1121 (or second brake parts 1131) fail to move in the first holes 112 (or second holes 113), and then cooperate with the curved tooth profile 121 to lock the rotor disc 120. It is easily known that the flow resistance of hydraulic oil between the first channel section and the second channel section is directly related to the opening degree of the communication channel. When the opening degree of the communication channel is high, the flow resistance of hydraulic oil is small and the resistance to motion of the brake parts between the stretching position and the retraction position is also small, and when the opening degree of the communication channel is low, the flow resistance of hydraulic oil is large and the resistance to motion of the brake parts between the stretching position and the retraction position is also large. Therefore, the brake damping of the joint can be adjusted by adjusting the opening degree of the communication channel. Preferably, the displacements of the plurality of first brake parts 1121 relative to a retraction position are equal to each other, and the displacements of the plurality of second brake parts 1131 relative to a retraction position are equal to each other during rotations of the rotor disc 120. More preferably, the first brake parts 1121 and the second brake parts 1131 are arranged at intervals on the radial inner surface of the stator ring 110.

Further see Fig. 1 and 2. The switch part 111 may be arranged on one side surface of the stator ring 110 and can move in the axial direction of the stator ring to open or close the communication channel and adjust the opening degree of the communication channel, and the switch part 111 may be driven by a linear motor.

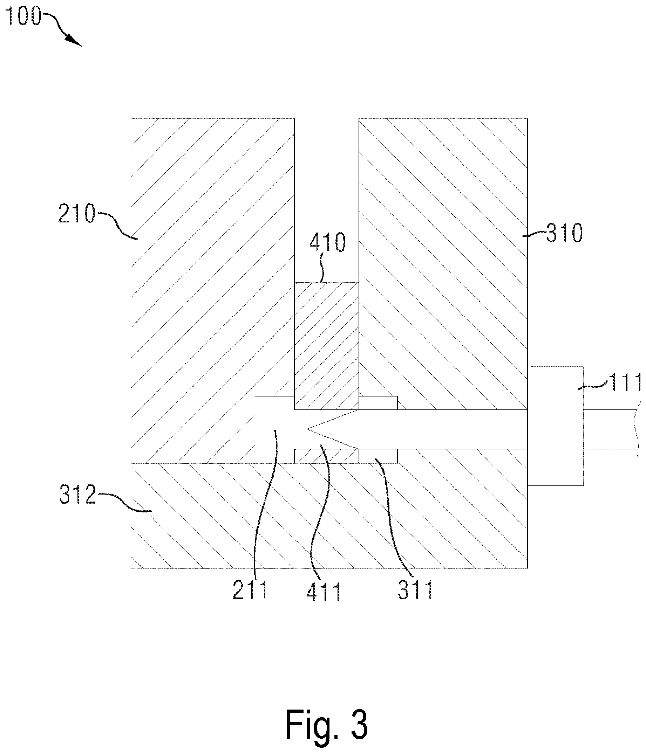

Various configuration modes may be available for the first channel section, the second channel section and the communication channel. A preferred implementation mode is exemplarily described below in combination with Fig. 1 and 3. As shown in the figures, the stator ring 110 comprises a first stator ring portion 210 and a second stator ring portion 310. An annular groove 211 is arranged on the first stator ring portion 210. The second stator ring portion 310 has a base and an axial bulge 312 protruding from the base and extending circumferentially around the axis of the stator ring 110. An annular groove 311 is arranged around the axial bulge 312 on the base. The first stator ring portion 210 is put on the axial bulge 312 of the second stator ring portion 310, with the side having the annular groove 211 facing the base of the second stator ring portion 310. In addition, a sealing member 410 is arranged between the first stator ring portion 210 and the second stator ring portion 310. A channel 411 extending in the axial direction is arranged in the sealing member 410. The first stator ring portion 210, the second stator ring portion 310 and the sealing member 410 are airtightly arranged so that the annular groove 211, the annular groove 311 and the wall of the sealing member 410 jointly form the first channel section 211 and the second channel section 311 stacked in an axial direction. The channel 411 forms the communication channel 411 through which the first channel section 211 and the second channel section 311 communicate with each other.

As further shown in Fig. 3, the switch part 111 is airtightly arranged on one side surface (the side surface of the second stator ring portion 310 in the figure) of the stator ring 110 and is axially inserted from the side surface into the second channel section 311 and the communication channel 411. In the present implementation mode, the switch part 111 is a needle valve spool, the end of the switch part is in the shape of a taper, under the driving of an actuating part (for example, a linear motor), the position of the tapered end in the communication channel 411 is controlled to completely close the communication cannel 411, completely open the communication channel 411, and partially open or partially close the communication channel 411 to control the flow of hydraulic oil between two channel sections 211 and 311 and the motion of the brake parts 1121 and 1131, and thus a damping-adjustable flexible brake assembly 100 for a robot joint is realized. In the illustrated example, the sealing member 410 and the first stator ring portion 210 are airtightly put on the axial bulge 312 to form the first channel section 211 and the second channel section 311 stacked in an axial direction, and the communication channel 411 located between the first channel section and the second channel section and communicating with the first channel section and the second channel section. However, the stator ring portion may have no axial bulge, the shapes of the two stator ring portions may be the same and the two stator ring portions may be symmetrically arranged to form the channel sections and the communication channel via the sealing member.

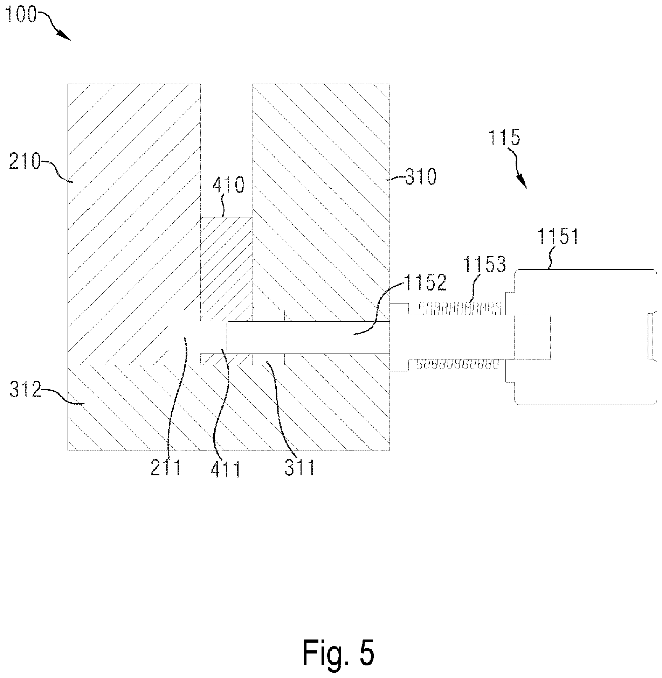

Fig. 5 further schematically illustrates the switch part 115 according to a further preferred implementation mode of the present invention. As shown in the figure, the switch part 115 comprises a linear coil 1151, a piston 1152 and a spring 1153 arranged between the linear coil and the piston, when the linear coil 1151 is connected to a power supply, the piston 1152 made of stainless steel, for example, is in the retraction position under the action of a magnetic force generated by the linear coil and opens the communication channel 411, and when the linear coil 1151 is disconnected from the power supply, the piston 1152 is in the stretching position under the action of the elastic force of the spring 1153 and is in airtight fit with the communication channel 411 to close the communication channel 411.

In a further aspect, the present invention further provides a robot joint with the brake assembly, wherein the stator ring 110 is connected to a joint cover via a connecting hole 114 and the rotor disc 120 is connected to the torque input shaft and the joint output shaft via the connecting holes 122 and 123. In a still further aspect, the present invention further provides a robot with the robot joint. Since the brake assembly 100 can bear a large torque, it can be arranged on the joint output side to isolate an external impact. In addition, because of the damping characteristics of the brake assembly 100, it can fill up the clearance in the joint to effectively reduce spurious vibrations, and thus can improve the operation performance of the robot joint.

For the joint of the present invention, the brake parts can be actuated to realize damping adjustments of the joint and the brake of the joint only by using a small actuating part (for example, a linear motor) to actuate the switch parts. Therefore, the joint of the present invention saves energy. In addition, because of the damping characteristics of the brake parts, they can fill up the clearances in the joint to improve the operation performance of a robot. Furthermore, since the joint of the present invention is collaboratively braked by a plurality of brake parts in a hydraulic way, the joint can bear a large torque and can be arranged on the output side of the joint.

It should be understood that although the Description gives a description by embodiment, it does not mean that each embodiment contains only one independent technical solution. The description method in the Description is only for the sake of clarity. Those skilled in the art should consider the Description as an integral body. The technical solutions in all these embodiments can be combined properly to form other implementation modes that those skilled in the art can understand.

## Claims

1. A brake assembly for a robot joint, the brake assembly (100) comprises:
a stator ring (110), a channel being arranged in the stator ring, the channel containing hydraulic oil, the channel comprising a first channel section (211) and a second channel section (311) communicating with each other through a communication channel (411), switch parts (111, 115) being arranged in the communication channel (411) and being configured
to open and close the communication channel, a plurality of first holes (112) extending radially being opened in the radial inner surface of the stator ring (110) in the first channel section (211), a plurality of first brake parts (1121) being airtightly arranged in the corresponding first holes (112) and being configured to move between a stretching position and a retraction position along the axes of the corresponding first holes (112), a plurality of second holes (113) extending radially being opened in the radial inner surface of the stator ring (110) in the second channel section (311), a plurality of second brake parts (1131) being airtightly arranged in the corresponding second holes (113) and being configured to move between a stretching position and a retraction position along the axes of the corresponding second holes (113), and
a rotor disc (120) concentrically arranged in the stator ring (110), the rotor disc being configured
to rotate around the axis common to the stator ring (110) relative to the stator ring (110), the outer circumference of the rotor disc (120) having a curved tooth profile (121),
wherein, the pressure of the hydraulic oil is configured to that each first brake part (1121) and each second brake part (1131) simultaneously contact the curved tooth profile (121) of the rotor disc (120), the positions of the plurality of first holes (112) and the plurality of second holes (113) and the curved tooth profile (121) are configured to that the sum of the displacements of all the first brake parts (1121) and all the second brake parts (1131) relative to the retraction position is constant during a rotation of the rotor disc (120) and thus the rotor disc (120) is configured to rotate relative to the stator ring (110) when the switch parts (111, 115) do not close the communication channel (411), and in addition, the positions of the plurality of first holes (112) and the curved tooth profile (121) are configured to that the sum of the displacements of all the first brake parts (1121) relative to the retraction position is not constant during a rotation of the rotor disc (120) and thus the first brake parts (1121) and the second brake parts (1131) are configured to brake the rotor disc (120) when the switch parts (111, 115) close the communication channel (411).

2. The brake assembly according to claim 1, wherein the switch part (115) comprises a linear coil (1151), a piston (1152) and a spring (1153) arranged between the linear coil and the piston, when the linear coil (1151) is connected to a power supply, the piston (1152) is in the retraction position under the action of a magnetic force generated by the linear coil and opens the communication channel (411), and when the linear coil (1151) is disconnected from the power supply, the piston (1152) is in the stretching position under the action of the elastic force of the spring (1153) and closes the communication channel (411).

3. The brake assembly according to claim 1, wherein the switch part (111) is configured to adjust the opening degree of the communication channel (411).

4. The brake assembly according to claim 3, wherein the first brake parts (1121) and the second brake parts (1131) are arranged at intervals on the radial inner surface of the stator ring (110).

5. The brake assembly according to claim 4, wherein the displacements of the plurality of first brake parts (1121) relative to the retraction position are equal to each other during a rotation of the rotor disc (120).

6. The brake assembly according to claim 5, wherein the displacements of the plurality of second brake parts (1131) relative to the retraction position are equal to each other during a rotation of the rotor disc (120).

7. The brake assembly according to claim 1, wherein the curved tooth profile (121) is a cycloid tooth profile.

8. The brake assembly according to claim 3, wherein the switch part (111) can move in the axial direction of the stator ring (110) to adjust the opening degree of the communication channel (411).

9. The brake assembly according to claim 8, wherein the first channel section (211) and the second channel section (311) are two circular channels stacked in an axial direction, the two channel sections communicate with each other through a communication channel (411) extending in the axial direction, the switch part (111) is tightly arranged in the communication channel (411) and can move along the airtight channel to completely or partially close, or partially or completely open the communication channel (411).

10. The brake assembly according to claim 9, wherein the stator ring (110) comprises a first stator ring portion (210) and a second stator ring portion (310) stacked in an axial direction, and a sealing member (410) located between the first and second stator ring portions, the first channel section (211) is formed in the first stator ring portion (210), the second channel section (311) is formed in the second stator ring portion (310), and the communication channel (411) is formed in the sealing member (410).

11. The brake assembly according to claim 10, wherein the second stator ring portion (310) has an axial bulge (312) extending circumferentially, the first stator ring portion (210) is put on the axial bulge (312), and the first channel section (211) is sealed by the sealing member (410) and the axial bulge (312).

12. The brake assembly according to claim 8, wherein the switch part (111) is a needle valve spool driven by a linear motor.

13. The brake assembly according to claim 1, wherein the shape of the end of brake parts (1121, 1131) matches a portion of the curved tooth profile (121).

14. A robot joint, the robot joint having the brake assembly (100) as claimed in any of claims 1 to 13, wherein the stator ring (110) is connected to a joint cover and the rotor disc (120) is connected to the joint output shaft.

15. A robot, the robot having the robot joint as claimed in claim 14.

## Patentansprüche

1. Bremsanordnung für eine Roboterverbindung, wobei die Bremsanordnung (100) Folgendes umfasst:
einen Statorring (110), einen Kanal, der in dem Statorring angeordnet ist, wobei der Kanal Hydrauliköl enthält, wobei der Kanal einen ersten Kanalabschnitt (211) und einen zweiten Kanalabschnitt (311) umfasst, die miteinander über einen Kommunikationskanal (411) kommunizieren, Schaltteile (111, 115), die im Kommunikationskanal (411) angeordnet sind und dazu ausgelegt sind, den Kommunikationskanal zu öffnen und zu schließen, mehrere erste Löcher (112), die sich radial erstrecken, die in der radialen inneren Oberfläche des Statorrings (110) im ersten Kanalabschnitt (211) geöffnet werden, mehrere erste Bremsteile (1121), die luftdicht in den entsprechenden ersten Löchern (112) angeordnet sind und dazu ausgelegt sind, sich zwischen einer Dehnungsposition und einer Rückzugsposition entlang der Achsen der entsprechenden ersten Löcher (112) zu bewegen, mehrere zweite Löcher (113), die sich radial erstrecken, die in der radial inneren Oberfläche des Statorrings (110) im zweiten Kanalabschnitt (311) geöffnet werden, mehrere zweite Bremsteile (1131), die luftdicht in den entsprechenden zweiten Löchern (113) angeordnet sind und dazu ausgelegt sind, sich zwischen einer Dehnungsposition und einer Rückzugsposition entlang der Achsen der entsprechenden zweiten Löcher (113) zu bewegen, und
eine Rotorscheibe (120), konzentrisch in dem Statorring (110) angeordnet, wobei die Rotorscheibe dazu ausgelegt ist, um die gemeinsame Achse mit dem Statorring (110) relativ zum Statorring (110) zu rotieren, wobei der äußere Umfang der Rotorscheibe (120) ein gerundetes Zahnprofil (121) aufweist,
wobei der Druck des Hydrauliköls so ausgelegt ist, dass jeder erste Bremsteil (1121) und jeder zweite Bremsteil (1131) gleichzeitig in Kontakt mit dem gerundeten Zahnprofil (121) der Rotorscheibe (120) kommen, wobei die Positionen der mehreren ersten Löcher (112) und der mehreren zweiten Löcher (113) und des gerundeten Zahnprofils (121) so ausgelegt sind, dass die Summe der Versetzungen aller ersten Bremsteile (1121) und aller zweiten Bremsteile (1131) relativ zur Rückzugsposition während einer Rotation (120) konstant ist und daher die Rotorscheibe (120) dazu ausgelegt ist, relativ zum Statorring (110) zu rotieren, wenn die Schaltteile (111, 115) den Kommunikationskanal (411) nicht schließen, und wobei zusätzlich die Positionen der mehreren ersten Löcher (112) und des gerundeten Zahnprofils (121) so ausgelegt sind, dass die Summe der Versetzungen aller ersten Bremsteile (1121) relativ zur Rückzugsposition während einer Rotation der Rotorscheibe (120) nicht konstant ist und daher die ersten Bremsteile (1121) und die zweiten Bremsteile (1131) dazu ausgelegt sind, die Rotorscheibe (120) zu bremsen, wenn die Schaltteile (111, 115) den Kommunikationskanal (411) schließen.

2. Bremsanordnung nach Anspruch 1, wobei der Schaltteil (115) eine lineare Spule (1151), einen Kolben (1152) und eine Feder (1153), angeordnet zwischen der linearen Spule und dem Kolben, umfasst, wobei wenn die lineare Spule (1151) mit einer Leistungsversorgung verbunden ist, der Kolben (1152) unter der Aktion einer durch die lineare Spule erzeugten Magnetkraft in der Rückzugsposition ist und den Kommunikationskanal (411) öffnet, und wenn die lineare Spule (1151) von der Leistungsversorgung getrennt ist, der Kolben (1152) unter der Aktion der elastischen Kraft der Feder (1153) in der Dehnungsposition ist und den Kommunikationskanal (411) schließt.

3. Bremsanordnung nach Anspruch 1, wobei der Schaltteil (111) dazu ausgelegt ist, den Öffnungsgrad des Kommunikationskanals (411) anzupassen.

4. Bremsanordnung nach Anspruch 3, wobei die ersten Bremsteile (1121) und die zweiten Bremsteile (1131) an Intervallen auf der radialen inneren Oberfläche des Statorrings (110) angeordnet sind.

5. Bremsanordnung nach Anspruch 4, wobei die Versetzungen der mehreren ersten Bremsteile (1121) relativ zur Rückzugsposition während einer Rotation der Rotorscheibe (120) einander gleich sind.

6. Bremsanordnung nach Anspruch 5, wobei die Versetzungen der mehreren zweiten Bremsteile (1131) relativ zur Rückzugsposition während einer Rotation der Rotorscheibe (120) einander gleich sind.

7. Bremsanordnung nach Anspruch 1, wobei das gerundete Zahnprofil (121) ein zykloides Zahnprofil ist.

8. Bremsanordnung nach Anspruch 3, wobei sich der Schaltteil (111) in der axialen Richtung des Statorrings (110) bewegen kann, um den Öffnungsgrad des Kommunikationskanals (411) anzupassen.

9. Bremsanordnung nach Anspruch 8, wobei der erste Kanalabschnitt (211) und der zweite Kanalabschnitt (311) zwei kreisförmige Kanäle sind, die in einer axialen Richtung gestapelt sind, wobei die zwei Kanalabschnitte miteinander über einen Kommunikationskanal (411) kommunizieren, der sich in die axiale Richtung erstreckt, wobei der Schaltteil (111) eng im Kommunikationskanal (411) angeordnet ist und sich entlang des luftdichten Kanals bewegen kann, um den Kommunikationskanal (411) vollständig oder teilweise zu schließen oder teilweise oder vollständig zu öffnen.

10. Bremsanordnung nach Anspruch 9, wobei der Statorring (110) einen ersten Statorringteil (210) und einen zweiten Statorringteil (310), die in einer axialen Richtung gestapelt sind, und ein Abdichtungselement (410), das zwischen dem ersten und dem zweiten Statorringteil befindlich ist, umfasst, wobei der erste Kanalabschnitt (211) im ersten Statorringteil (210) gebildet ist, der zweite Kanalabschnitt (311) im zweiten Statorringteil (310) gebildet ist und der Kommunikationskanal (411) im Abdichtungselement (410) gebildet ist.

11. Bremsanordnung nach Anspruch 10, wobei der zweite Statorringteil (310) eine axiale Wölbung (312) aufweist, die sich umlaufend erstreckt, wobei der erste Statorringteil (210) auf die axiale Wölbung (312) gesetzt wird, und wobei der erste Kanal (211) durch das Abdichtungselement (410) und die axiale Wölbung (312) abgedichtet wird.

12. Bremsanordnung nach Anspruch 8, wobei der Schaltteil (111) eine durch einen linearen Motor angetriebene Nadelventilspule ist.

13. Bremsanordnung nach Anspruch 1, wobei die Form des Endes der Bremsteile (1121, 1131) zu einem Teil des gerundeten Zahnprofils (121) passt.

14. Roboterverbindung, wobei die Roboterverbindung die Bremsanordnung (100) nach einem der Ansprüche 1 bis 13 aufweist, wobei der Statorring (110) mit einer Verbindungsabdeckung verbunden ist und die Rotorscheibe (120) mit der Verbindungsausgangswelle verbunden ist.

15. Roboter, wobei der Roboter die Roboterverbindung nach Anspruch 14 aufweist.

## Revendications

1. Ensemble frein pour une articulation de robot, l'ensemble frein (100) comprend :
un anneau stator (110), un canal étant agencé dans l'anneau stator, le canal contenant de l'huile hydraulique, le canal comprenant une première section de canal (211) et une seconde section de canal (311) communiquant l'une avec l'autre par l'intermédiaire d'un canal de communication (411), des parties de commutation (111, 115) étant agencées dans le canal de communication (411) et étant configurées pour ouvrir et fermer le canal de communication, une pluralité de premiers trous (112) s'étendant radialement, étant ouverts dans la surface intérieure radiale de l'anneau stator (110) dans la première section de canal (211), une pluralité de premières parties de frein (1121) étant agencées de façon hermétique à l'air dans les premiers trous correspondants (112) et étant configurées pour se déplacer entre une position d'extension et une position de rétraction le long des axes des premiers trous correspondants (112), une pluralité de seconds trous (113) s'étendant radialement, étant ouverts dans la surface intérieure radiale de l'anneau stator (110) dans la seconde section de canal (311), une pluralité de seconde parties de frein (1131) étant agencées de façon hermétique à l'air dans les seconds trous correspondants (113) et étant configurées pour se déplacer entre une position d'extension et une position de rétraction le long des axes des seconds trous correspondants (113), et
un disque rotor (120) concentriquement agencé dans l'anneau stator (110), le disque rotor étant configuré pour entrer en rotation autour de l'axe commun à l'anneau stator (110) relativement à l'anneau stator (110), la circonférence extérieure du disque rotor (120) ayant un profil de dent incurvé (121),
dans lequel la pression de l'huile hydraulique est configurée pour que chaque première partie de frein (1121) et chaque seconde partie de frein (1131) entrent simultanément en contact avec le profil de dent incurvé (121) du disque rotor (120), les positions de la pluralité de premiers trous (112) et de la pluralité de seconds trous (113) et le profil de dent incurvé (121) sont configurés pour que la somme des déplacements de toutes les premières parties de frein (1121) et de toutes les secondes parties de frein (1131) relativement à la position de rétraction soit constante durant une rotation du disque rotor (120), et ainsi le disque rotor (120) est configuré pour entrer en rotation relativement à l'anneau stator (110) lorsque les parties de commutation (111, 115) ne ferment pas le canal de communication (411), et, de plus, les positions de la pluralité de premiers trous (112) et le profil de dent incurvé (121) sont configurés pour que la somme des déplacements de toutes les premières parties de frein (1121) relativement à la position de rétraction ne soit pas constante durant une rotation du disque rotor (120), et ainsi les premières parties de frein (1121) et les secondes parties de frein (1131) sont configurées pour freiner le disque rotor (120) lorsque les parties de commutation (111, 115) ferment le canal de communication (411).

2. Ensemble frein selon la revendication 1, dans lequel la partie de commutation (115) comprend une bobine linéaire (1151), un piston (1152) et un ressort (1153) agencé entre la bobine linéaire et le piston, lorsque la bobine linéaire (1151) est connectée à une alimentation électrique, le piston (1152) est dans la position de rétraction sous l'action d'une force magnétique générée par la bobine linéaire et ouvre le canal de communication (411), et, lorsque la bobine linéaire (1151) est déconnectée de l'alimentation électrique, le piston (1152) est dans la position d'extension sous l'action de la force élastique du ressort (1153) et ferme le canal de communication (411).

3. Ensemble frein selon la revendication 1, dans lequel la partie de commutation (111) est configurée pour ajuster le degré d'ouverture du canal de communication (411).

4. Ensemble frein selon la revendication 3, dans lequel les premières parties de frein (1121) et les secondes parties de frein (1131) sont agencées à des intervalles sur la surface intérieure radiale de l'anneau stator (110).

5. Ensemble frein selon la revendication 4, dans lequel les déplacements de la pluralité de premières parties de frein (1121) relativement à la position de rétraction sont égaux les uns aux autres durant une rotation du disque rotor (120).

6. Ensemble frein selon la revendication 5, dans lequel les déplacements de la pluralité de seconde parties de frein (1131) relativement à la position de rétraction sont égaux les uns aux autres durant une rotation du disque rotor (120).

7. Ensemble frein selon la revendication 1, dans lequel le profil de dent incurvé (121) est un profil de dent cycloïde.

8. Ensemble frein selon la revendication 3, dans lequel la partie de commutation (111) peut se déplacer dans la direction axiale de l'anneau stator (110) pour ajuster le degré d'ouverture du canal de communication (411).

9. Ensemble frein selon la revendication 8, dans lequel la première section de canal (211) et la seconde section de canal (311) sont deux canaux circulaires empilés dans une direction axiale, les deux sections de canal communiquent l'une avec l'autre par l'intermédiaire d'un canal de communication (411) s'étendant dans la direction axiale, la partie de commutation (111) est agencée de façon serrée dans le canal de communication (411) et peut se déplacer le long du canal hermétique à l'air pour complètement ou partiellement fermer, ou partiellement ou complètement ouvrir le canal de communication (411).

10. Ensemble frein selon la revendication 9, dans lequel l'anneau stator (110) comprend une première portion d'anneau stator (210) et une seconde portion d'anneau stator (310) empilées dans une direction axiale, et un élément d'étanchéité (410) situé entre les première et seconde portions d'anneau stator, la première section de canal (211) est formée dans la première portion d'anneau stator (210), la seconde section de canal (311) est formée dans la seconde portion d'anneau stator (310), et le canal de communication (411) est formé dans l'élément d'étanchéité (410).

11. Ensemble frein selon la revendication 10, dans lequel la seconde portion d'anneau stator (310) a un renflement axial (312) s'étendant circonférentiellement, la première portion d'anneau stator (210) est placée sur le renflement axial (312), et l'étanchéité de la première section de canal (211) est effectuée par l'élément d'étanchéité (410) et le renflement axial (312).

12. Ensemble frein selon la revendication 8, dans lequel la partie de commutation (111) est un tiroir de soupape à pointeau entraîné par un moteur linéaire.

13. Ensemble frein selon la revendication 1, dans lequel la forme de l'extrémité de parties de frein (1121, 1131) est assortie à une portion du profil de dent incurvé (121).

14. Articulation de robot, l'articulation de robot ayant l'ensemble frein (100) tel que revendiqué dans l'une quelconque des revendications 1 à 13, dans lequel l'anneau stator (110) est relié à un couvercle d'articulation et le disque rotor (120) est relié à l'arbre de sortie d'articulation.

15. Robot, le robot ayant l'articulation de robot telle que revendiquée dans la revendication 14.
